# EUROPEAN PATENT APPLICATION

(11) **EP 4 485 626 A1**
(43) Date of publication of application: **01.01.2025**
(21) Application number: 24172292.5
(22) Date of filing: 24.04.2024
(51) Int. Cl.: H01M 10/658, H01M 50/211, H01M 50/273

(54) **BATTERY DEVICE COMPRISING THERMAL BLOCKING MEMBER AND FIXING STRUCTURE**

(30) Priority: 29.06.2023 KR 20230084133
(71) Applicant: SK On Co., Ltd., Seoul 03161 (KR)
(72) Inventor: KO, Jeong Woon, 34124 Daejeon (KR)
(74) Representative: Stolmár & Partner Patentanwälte PartG mbB

(57) **Abstract**

A battery device includes a case including a cover having a venting hole formed therein, a cell assembly disposed within the case and including a plurality of battery cells, a fixing structure formed on a rear surface of the cover, a first heat blocking member having at least a portion disposed between at least some of the plurality of battery cells and including a first end connected to the fixing structure, and a second heat blocking member disposed between the cell assembly and the cover and covering the venting hole.

## Description

### BACKGROUND

### 1. FIELD

The present disclosure relates to a battery device including a heat blocking member and a fixing structure. More particularly, the present disclosure relates to a battery device including a plurality of heat blocking members and a fixing structure for fixing the plurality of heat blocking members.

### 2. DESCRIPTION OF RELATED ART

Unlike primary batteries, secondary batteries may be charged and discharged and may be applied to various fields, such as digital cameras, mobile phones, laptops, hybrid vehicles, electric vehicles, and energy storage systems (ESSs). The secondary batteries may include a lithium ion battery, a nickel-cadmium battery, a nickel-metal hydride battery, or a nickel-hydrogen battery.

Secondary batteries are manufactured as flexible pouch-type battery cells or rigid prismatic or cylindrical can-type battery cells. A plurality of battery cells may be formed as a stacked cell assembly.

The cell assembly may be disposed inside a case to form a battery module, and a plurality of battery modules may be disposed inside a pack housing to form a battery pack.

### SUMMARY

Gas may occur from an electrode assembly located inside a battery cell. If gas released from the battery cell is transferred to other battery cells or other components, heat transfer may occur or other components may be damaged.

A battery device (e.g., a battery module) may include a cell assembly including a plurality of battery cells and a case accommodating the cell assembly. Since a plurality of battery cells are stacked, heat, gas, or flames occurring in one battery cell may spread to other battery cells, resulting in thermal runaway or thermal propagation.

The battery device may include a heat blocking member to reduce the spread of heat, gas, or flames between a plurality of battery cells. When a battery cell ignites, it may be necessary to fix the position of the heat blocking member to maintain a sealed space. The heat blocking member may be coupled to the case of the battery device using coupling components (e.g., bolts) or a coupling process (e.g., welding). However, the weight of the battery device may increase due to the coupling components of the heat blocking member, or the production costs of the heat blocking member may increase due to the coupling process.

The disclosed technology may be implemented in some embodiments to provide a battery device including a thermal propagation blocking member capable of delaying thermal propagation.

The disclosed technology may also be implemented in some embodiments to provide a battery device including a fixing structure capable of fixing a heat blocking member without a separate coupling components or a coupling process.

The battery device of the present disclosure may be widely applied in green technology fields, such as electric vehicles, battery charging stations, and solar power generation and wind power generation using other batteries. In addition, the battery device of the present disclosure may be used in eco-friendly electric vehicles and hybrid vehicles to prevent climate change by suppressing air pollution and greenhouse gas emissions.

A battery device includes: a case including a cover having a venting hole formed therein; a cell assembly disposed within the case and including a plurality of battery cells; a fixing structure formed on a rear surface of the cover; a first heat blocking member having at least a portion disposed between at least some of the plurality of battery cells and including a first end connected to the fixing structure; and a second heat blocking member disposed between the cell assembly and the cover and covering the venting hole.

The fixing structure may include a first protruding region protruding from the rear surface of the cover toward the cell assembly. The first end may be inserted into the first protruding region.

The fixing structure may surround at least a portion of the second heat blocking member.

The fixing structure may be formed in the cover and includes a first recess accommodating the first end.

At least a portion of the second heat blocking member may face the first heat blocking member.

The first heat blocking member may include a mica sheet or ceramic wool.

Gas occurring in the plurality of battery cells may pass through the second heat blocking member and the venting hole to be discharged to the outside of the battery device.

The second heat blocking member may include a ceramic wool or polymer sheet including a plurality of pores.

The case may be connected to the cover and includes an accommodating portion accommodating the cell assembly. The battery device may further include a heat conductive member applied to the accommodating portion.

The battery device may further include: an auxiliary fixing structure formed on a front surface of the accommodating portion. The first heat blocking member may include a second end, opposite the first end, and connected to the auxiliary fixing structure.

The auxiliary fixing structure may include a second protruding region protruding from the accommodating portion toward the cell assembly. The second end may be inserted into the second protruding region.

The auxiliary fixing structure may be formed in the accommodating portion and include a second recess accommodating the second end.

The cell assembly may be located between the second heat blocking member and the heat conductive member.

A first length of the first heat blocking member may be greater than a second length of the battery cell.

The second heat blocking member may be surrounded by the cover, the cell assembly, and the first heat blocking member.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell according to an embodiment;
FIG. 2 is a perspective view of a battery device according to an embodiment;
FIG. 3 is an exploded perspective view of a battery device according to an embodiment; and
FIGS. 4, 5, 6, and 7 are schematic diagrams of a cross- section taken along line A-A' of FIG. 4, according to various embodiments of the present disclosure.

### DETAILED DESCRIPTION

The present disclosure will be described in detail with reference to the accompanying drawings. However, this is merely illustrative and the present disclosure is not limited to the specific embodiments described by way of example.

Terms and words used in the present specification and claims to be described below should not be construed as limited to ordinary or dictionary terms, and should be construed in accordance with the technical idea of the present disclosure based on the principle that the inventors may properly define their own inventions in terms of terms in order to best explain the invention.

Therefore, the embodiments described in the present specification and the configurations illustrated in the drawings are merely the most preferred embodiments of the present disclosure and are not intended to represent all of the technical ideas of the present disclosure, and thus should be understood that various equivalents and modifications may be substituted at the time of the present application.

The detailed description of well-known functions and constructions which may obscure the gist of the present disclosure will be omitted. Some of the elements in the accompanying drawings are exaggerated, omitted, or schematically illustrated, and the size of each element does not entirely reflect the actual size.

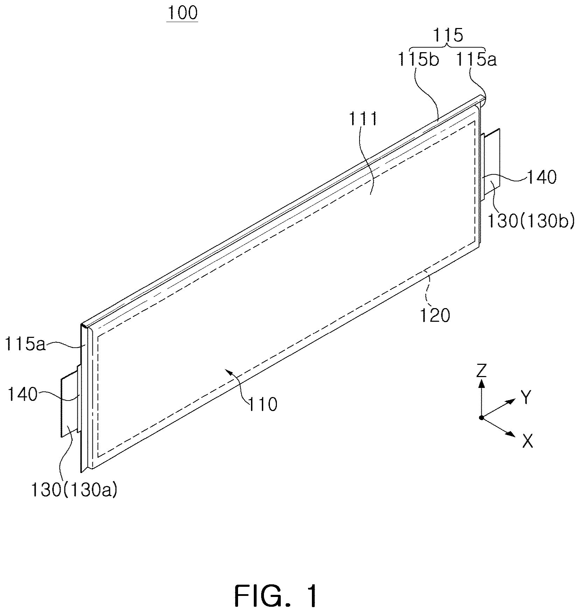

FIG. 1 is a perspective view of a battery cell according to an embodiment.

Referring to FIG. 1, a battery cell 100 may include a pouch 110, an electrode assembly 120, and an electrode lead 130. The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery that may be charged and discharged.

The pouch 110 may form at least a portion of the exterior of the battery cell 100. The pouch 110 may include an electrode accommodating portion 111 accommodating the electrode assembly 120 and a sealing portion 115 sealing at least a portion of the circumference of the electrode accommodating portion 111. The electrode accommodating portion 111 may provide a space in which the electrode assembly 120 and an electrolyte are accommodated.

The sealing portion 115 may be formed by bonding at least a portion of the circumference of the pouch 110. The sealing portion 115 is formed in the form of a flange extending outwardly from the electrode accommodating portion 111 formed in the shape of a container and may be disposed in at least a portion of the exterior of the electrode accommodating portion 111. In an embodiment, the sealing portion 115 may include a first sealing portion 115a in which the electrode lead 130 is located and a second sealing portion 115b in which the electrode lead 130 is not located. A portion of the electrode lead 130 may be drawn out or exposed to the outside of the pouch 110. In order to increase the degree of sealing of the first sealing portion 115a and at the same time ensure an electrical insulation state in the position at which the electrode lead 130 is drawn out, the electrode lead 130 may be covered by an insulating film 140. The insulating film 140 may be formed of a thinner film material than the electrode lead 130 and may be attached to both sides of the electrode lead 130.

In an embodiment, the electrode leads 130 may be arranged on both sides of the battery cell 100 in a longitudinal direction (a Y-axis direction) to face in the opposite directions. For example, the electrode leads 130 may include a positive electrode lead 130a having a first polarity (e.g., a positive electrode) and facing one side of the battery cell 100 in the longitudinal direction and a negative electrode lead 130b having a second polarity (e.g., a negative electrode) and facing the other side of the battery cell 100 in the longitudinal direction. In the embodiment illustrated in FIG. 1, the sealing portion 115 may include two first sealing portions 115a in which the electrode lead 130 is disposed and one second sealing portion 115b in which the electrode lead 130 is not disposed.

The direction in which the electrode lead 130 is located may be selectively designed. In an embodiment (e.g., FIG. 1), the electrode lead 130 may include the positive electrode lead 130a and the negative electrode lead 130b located in the opposite direction of the positive electrode lead 130a with respect to the electrode assembly 120. In FIG. 1, the electrode leads 130 are illustrated to be disposed on both sides of the battery cell 100 in the longitudinal direction (e.g., the Y-axis direction) and facing each other in the opposite directions, but the structure of the electrode leads 130 is not limited thereto. For example, the two electrode leads 130 may be arranged substantially in parallel in the longitudinal direction (e.g., the Y-axis direction) of the battery cell 100.

Meanwhile, the pouch 110 is not limited to a structure in which the sealing portion 115 is formed on three sides by folding one sheet of outer case as illustrated in FIG. 1.

In an embodiment of the present disclosure, at least a portion of the sealing portions 115 may be formed to be folded at least once. By folding at least a portion of the sealing portion 115, bonding reliability of the sealing portion 115 may be improved and the area of the sealing portion 115 may be minimized. In the sealing portion 115 according to an embodiment, the second sealing portion 115b in which the electrode lead 130 is not disposed may be folded twice and then fixed by an adhesive member (not shown). The angle at which the second sealing portion 115b is bent or the number of times the second sealing portion is bent may vary. For example, in an embodiment (not shown), the second sealing portion 115b may be folded by 90° with respect to the first sealing portion 115a.

The electrode assembly 120 may include a cathode plate, an anode plate, and a separator. The separator may prevent contact between the positive plate and the negative plate. Those skilled in the art may understand that the electrode assembly 120 may be manufactured using a variety of methods. According to embodiments, an electrode assembly may be formed by repeatedly arranging a cathode, an anode, and a separator. In some embodiments, the electrode assembly may be a winding type, a stacking type, a Z-folding type, or a stack-folding type electrode assembly.

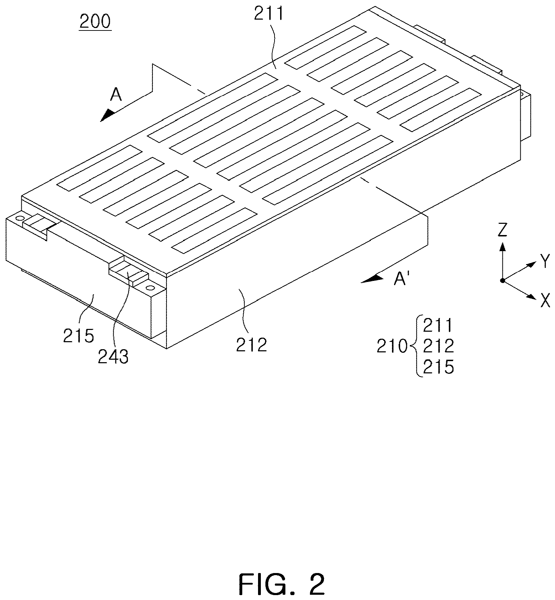

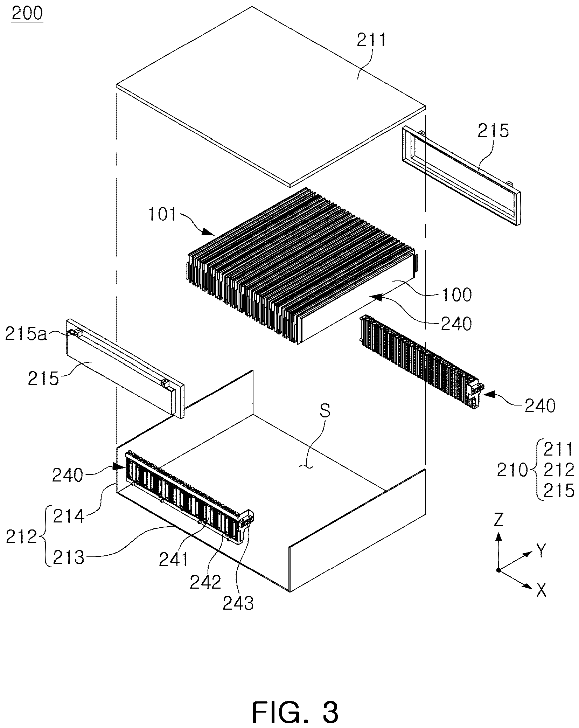

FIG. 2 is a perspective view of a battery device according to an embodiment. FIG. 3 is an exploded perspective view of a battery device according to an embodiment.

Referring to FIG. 2 and/or FIG. 3, a battery device 200 may include a cell assembly 101, a busbar assembly 240, and a case 210. The cell assembly 101 may include a plurality of battery cells 100. The description of the battery cell 100 in FIG. 1 may be applied to the battery cell 100 in FIG. 3. However, the battery cell 100 included in the battery device 200 is not limited to the pouch-type battery cell 100 of FIG. 1. According to embodiments, the cell assembly 101 may include a cylindrical battery cell, a prismatic battery cell, and/or a pouch-type battery cell.

The battery device 200 in this document may be a battery module or a battery pack.

The cell assembly 101 may have a substantially hexahedral shape. In an embodiment, the cell assembly 101 may be referred to as a cell stack. In an embodiment, the cell assembly 101 may include a plurality of battery cells 100 connected using adhesive tape.

The case 210 may form at least a portion of the exterior of the battery device 200 and may form an accommodating space S accommodating the cell assembly 101 and/or the busbar assembly 240. For example, the case 210 may include a cover 211 covering the cell assembly 101 and an accommodating portion 212 surrounding lower and side surfaces of the cell assembly 101. In an embodiment, the cover 211 may be referred to as an upper cover.

The accommodating portion 212 may include a main plate 213 covering the lower surface of the cell assembly 101 and a plurality of sidewall members 214 covering at least a portion of the side surface of the cell assembly 101. At least a portion of the accommodating space S may be surrounded by the main plate 213, the sidewall member 214, and an end plate 215. According to an embodiment, the main plate 213 and the sidewall member 214 may be formed integrally.

The case 210 may include the end plate 215 covering a portion of the side surface of cell assembly 101. In an embodiment, the end plate 215 may be connected to ends of the main plate 213 and the sidewall member 214 in the longitudinal direction (e.g., the Y-axis direction). The end plate 215 may cover a portion of the side surface of the cell assembly 101 and the busbar assembly 240. The end plate 215 may include a hole 215a to accommodate a connection terminal 243.

According to an embodiment, the case 210 may be formed of a material having high thermal conductivity, such as metal. For example, the case 210 may be formed of aluminum. However, the material of the case 210 is not limited thereto. According to another embodiment, case 210 may be formed of polymer. The case 210 may be referred to as a housing, module housing, or module case.

The busbar assembly 240 may include an electrically conductive busbar 241 electrically connected to the electrode lead 130 of the battery cell 100 and a busbar frame 242 supporting the busbar 241. The busbar frame 242 may be referred to as a support plate or frame. The busbar frame 242 may be formed of an electrically insulating material (e.g., polymer). At least a portion of the busbar frame 242 may be disposed between the cell assembly 101 and the busbar 241 to support the busbar 241. The busbar frame 242 may include at least one fastening hole (not shown) for accommodating a coupling component (e.g., a screw, a rivet, and/or a boss structure). The busbar frame 242 may be coupled to a portion (e.g., the end plate 215) of the case 210 by the coupling component. The shape of the busbar assembly 240 illustrated in FIG. 2 is optional. For example, the shape of the busbar 241 included in the busbar assembly 240 may be selectively changed.

The busbar assembly 240 may include at least one connection terminal 243 for electrical connection to an external unit. The electrode lead 130 of the battery cell 100 may be electrically connected to the outside of the battery device 200 through the busbar 241 and the connection terminal 243. For example, the connection terminal 243 may be connected to the busbar 241 through a wire or conductive structure (not shown), and current of the battery cell 100 may be transferred to a unit outside the battery device 200 through the busbar 241 and the connection terminal 243. The connection terminal 243 may be exposed to the outside of the case 210 through the hole 215a of the end plate 215.

For convenience of description, some components are omitted or exaggerated to be illustrated in this document. For example, the position of the connection terminal 243 and/or the number of battery cells 100 may be selectively designed. According to an embodiment (not shown), the battery device 200 may include a conductive member (e.g., a long busbar) for adjusting the position of the connection terminal 243.

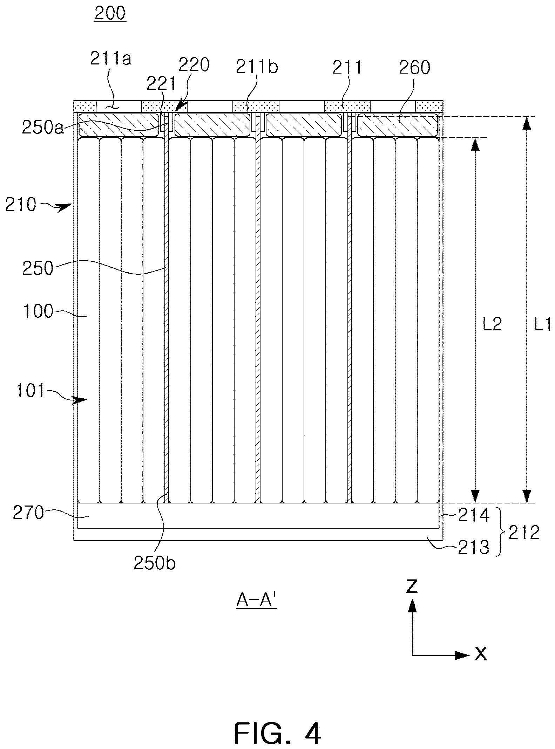

FIGS. 4, 5, 6, and 7 are schematic diagrams of a cross-section taken along line A-A' of FIG. 4, according to various embodiments of the present disclosure.

Referring to FIGS. 4 to 7, the battery device 200 may include the cell assembly 101 including a plurality of battery cells 100, the case 210 (e.g., the cover 211 and the accommodating portion 212), a fixing structure 220, a first heat blocking member 250, a second heat blocking member 260, a heat conductive member 270, and/or an auxiliary fixing structure 280. Descriptions of the battery cell 100, the cell assembly 101, and/or the case 210 of FIGS. 1, 2, and/or 3 may be applied to the battery cell 100, the cell assembly 101, and/or the case 210 of FIGS. 4 to 7.

The first heat blocking member 250 may prevent or delay thermal propagation and/or thermal runaway. For example, the first heat blocking member 250 may block or delay the propagation of heat, gas, and/or flames from the battery cell 100 to the other battery cells 100, thereby delaying the spread of heat and/or flames within the battery device 200. The first heat blocking member 250 may be referred to as a first barrier, a first heat blocking structure, or a first flame retardant pad.

The first heat blocking member 250 may be disposed between at least some of the plurality of battery cells 100. For example, the first heat blocking member 250 may be disposed for every four battery cells 100. However, this is an example, and the number of battery cells 100 included in a unit cell in which the first heat blocking member 250 is disposed may be optional.

The first heat blocking member 250 may include a flame retardant material. For example, the first heat blocking member 250 may include a mica sheet or ceramic wool. However, this is an example, the first heat blocking member 250 may include calcium carbonate, glass fiber, or a mineral fiber composite.

The fixing structure 220 may support or fix the first heat blocking member 250. For example, a first end 250a of the first heat blocking member 250 may be inserted into the fixing structure 220. Due to the fixing structure 220, the position of the first heat blocking member 250 may be fixed without a separate coupling component (e.g., adhesive tape, a bolt, or a screw) or a separate coupling process (e.g., welding), and thus, the weight of the battery device 200 may be reduced or the production costs of the battery device 200 may be reduced. In an embodiment, the fixing structure 220 may be referred to as a heat blocking member fixing structure or a heat blocking member guide structure.

The first heat blocking member 250 may have a shape for reducing the spread of heat and/or flames between the battery cells 100. For example, a first length L1 of the first heat blocking member 250 may be greater than a second length L2 of the battery cell 100. Since the first heat blocking member 250 is formed to be longer than the battery cell 100, even when the first heat blocking member 250 is bent due to gas occurring in the battery cell 100, the first heat blocking member 250 may seal a space between the battery cells 100.

The battery cells 100 may be spaced apart from the cover 211, and the first heat blocking member 250 may be in contact with the cover 211. The first length L1 and the second length L2 may refer to lengths of the first heat blocking member 250 and the battery cell 100 in a height direction (e.g., a Z-axis direction), respectively.

The fixing structure 220 may be formed on the cover 211. In an embodiment, the fixing structure 220 may be formed integrally with the cover 211. For example, the fixing structure 220 may be a portion of the cover 211 protruding from the cover 211. As another example, the fixing structure 220 may be a recess formed in the cover 211. The fixing structure 220 may be referred to as a first fixing structure or an upper fixing structure.

According to an embodiment (e.g., FIG. 4), the fixing structure 220 may protrude from a rear surface 211b of the cover 211 toward the cell assembly 101. For example, the fixing structure 220 may include a first protruding region 221 protruding from the rear surface 211b of the cover 211. The first protruding region 221 may include a gap or recess for insertion of the first heat blocking member 250. For example, the first end 250a of the first heat blocking member 250 may be inserted into the first protruding region 221 of the fixing structure 220.

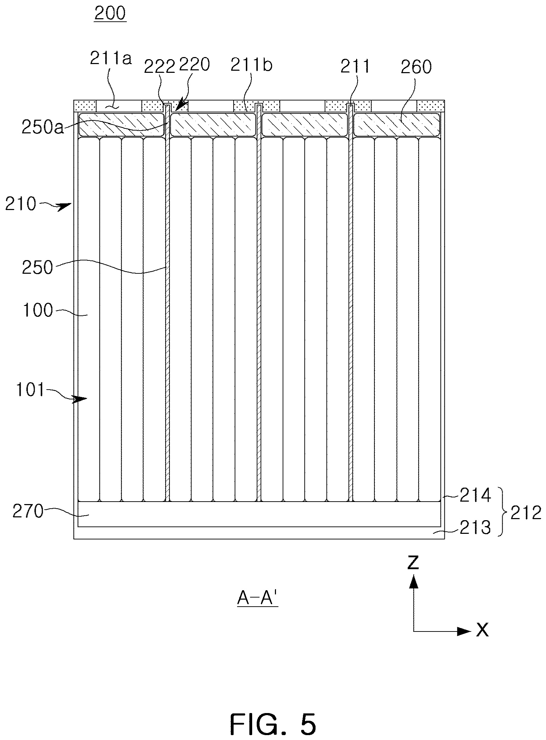

According to an embodiment (e.g., FIG. 5), the fixing structure 220 may be a first recess 222 formed in the cover 211. For example, the first end 250a of the first heat blocking member 250 may be inserted into the first recess 222. The first recess 222 may accommodate the first end 250a of the first heat blocking member 250. By inserting the first end 250a into the first recess 222, the first heat blocking member 250 may be coupled to the case 210. In an embodiment (not shown), the first recess 222 may be formed as a through-hole or a recess.

According to an embodiment, the case 210 may include at least one venting hole 211a. The venting hole 211a may provide a path for gas occurring in the battery cell 100 to be discharged to the outside of the battery device 200.

The second heat blocking member 260 may be disposed between the cell assembly 101 and the cover 211. For example, the second heat blocking member 260 may be disposed on the rear surface 211b of the cover 211 and cover the venting hole 211a. Gas occurring in the battery cell 100 may pass through the second heat blocking member 260 and the venting hole 211a to be discharged to the outside of the battery device 200. At least a portion of the second heat blocking member 260 may face the first heat blocking member 250. The second heat blocking member 260 may be referred to as a second barrier, a second heat blocking structure, or a second flame retardant pad.

The second heat blocking member 260 may include a breathable flame retardant material. For example, the second heat blocking member 260 may include a ceramic wool or polymer sheet (e.g., the FRB sheet of 3M) including a plurality of pores. For example, the second heat blocking member 260 may have a mesh shape. According to an embodiment, the material of the first heat blocking member 250 may be different from that of the second heat blocking member 260. For example, the second heat blocking member 260 may be formed of a breathable and flame retardant material, and the first heat blocking member 250 may be formed of a flame retardant material.

According to an embodiment, at least a portion of the second heat blocking member 260 may face the sealing portion (e.g., the second sealing portion 115b in FIG. 1) of the battery cell 100. For example, when the battery cell 100 is damaged (e.g., folding of the second sealing portion 115b is released), at least a portion of the gas released from the battery cell 100 may be discharged to the outside of the battery device 200 through the second heat blocking member 260.

According to an embodiment (not shown), the second heat blocking member 260 may be excluded. The battery device 200 not including the second heat blocking member 260 may include a flame retardant material (e.g., mica) coated on the rear surface 211b of the cover 211.

According to an embodiment, the fixing structure 220 may support or fix the second heat blocking member 260. The fixing structure 220 may surround at least a portion of the second heat blocking member 260. The second heat blocking member 260 may be located between the plurality of fixing structures 220. For example, the second heat blocking member 260 may be located in a space surrounded by the plurality of fixing structures 220, the cover 211, and the cell assembly 101. Due to the fixing structure 220, the position of the second heat blocking member 260 may be fixed, without a separate coupling component (e.g., adhesive tape, a bolt, or a screw), thereby reducing the weight of the battery device 200.

The battery device 200 may include a heat conductive member 270 applied to the accommodating portion 212 (e.g., main plate 213). The heat conductive member 270 may support the battery cell 100. The cell assembly 101 may be located between the second heat blocking member 260 and the heat conductive member 270. The heat conductive member 270 may improve heat conductivity inside the battery device 200. For example, the heat-conductive member 270 may be a thermal adhesive. At least a portion of heat occurring in the battery cell 100 may pass through the heat conductive member 270 and the case 210 to be discharged to the outside of the battery device 200.

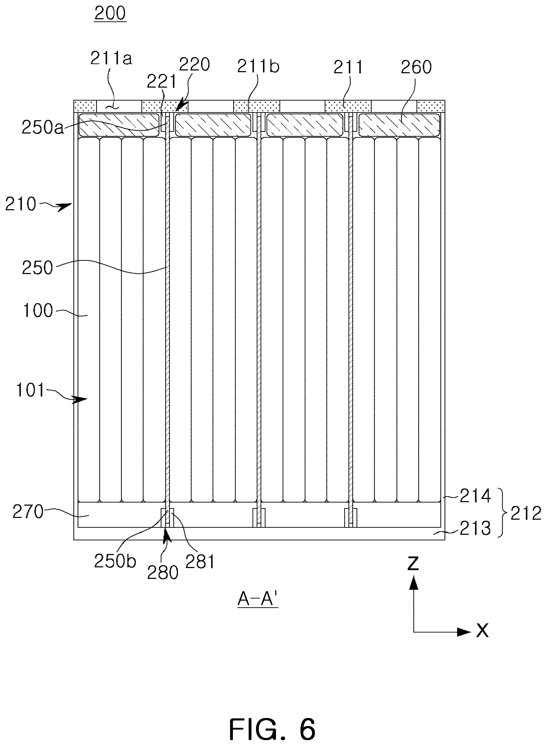

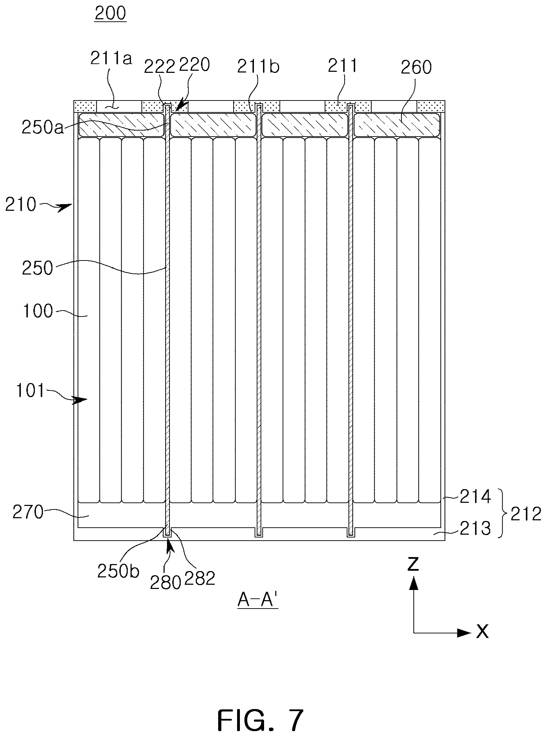

According to an embodiment (e.g., FIGS. 6 and 7), the battery device 200 may include the auxiliary fixing structure 280 formed in the accommodating portion 212. For example, the auxiliary fixing structure 280 may be a portion of the accommodating portion 212 protruding from the main plate 213 of the accommodating portion 212. As another example, the auxiliary fixing structure 280 may be a recess formed in the main plate 213. The auxiliary fixing structure 280 may be referred to as a second fixing structure or a lower fixing structure.

According to an embodiment (e.g., FIG. 6), the auxiliary fixing structure 280 may protrude from the main plate 213 toward the cell assembly 101. For example, the auxiliary fixing structure 280 may include a second protruding region 281 protruding from the main plate 213. The second protruding region 281 may include a gap or recess for insertion of the first heat blocking member 250. For example, a second end 250b of the first heat blocking member 250 may be inserted into the second protruding region 281 of the fixing structure 220. The second end 250b may be opposite to the first end 250a of the first heat blocking member 250. Due to the auxiliary fixing structure 280, the position of the first heat blocking member 250 may be fixed, without a separate coupling component (e.g., adhesive tape, a bolt, or a screw), thereby reducing the weight of the battery device 200. Since both ends (e.g., the first end 250a and the second end 250b) of the first heat blocking member 250 are fixed by the fixing structure 220 and the auxiliary fixing structure 280, durability of the battery device 200 may be improved.

According to an embodiment (e.g., FIG. 7), the auxiliary fixing structure 280 may be a second recess 282 formed in the cover 211. For example, the second end 250b of the first heat blocking member 250 may be inserted into the second recess 282. By inserting the second end 250b into the second recess 282, the first heat blocking member 250 may be coupled to the case 210. In an embodiment (not shown), the second recess 282 may be formed as a through-hole or a recess.

The shapes of the fixing structure 220 and the auxiliary fixing structure 280 may be selectively designed. For example, the embodiments of the battery device 200 illustrated in FIGS. 6 and 7 may be combined with each other. The battery device 200 according to an embodiment (not shown) may include the fixing structure 220 including the first protruding region 221 of FIG. 6 and the auxiliary fixing structure 280 including the second recess 282 of FIG. 7. The battery device 200 according to an embodiment (not shown) may include the fixing structure 220 including the first recess 222 in FIG. 7 and the auxiliary fixing structure 280 including the second protruding region 281 in FIG. 6.

In an embodiment (not shown), the auxiliary fixing structure 280 may be formed on the sidewall member 214 of the accommodating portion 212. For example, the sidewall member 214 may include a protruding region or recess for supporting or fixing at least a portion of the edge of the first heat blocking member 250. In an embodiment, the auxiliary fixing structure 280 may be formed on the main plate 213 and the sidewall member 214 of the accommodating portion 212.

In an embodiment (not shown), the fixing structure 220 may be excluded. For example, the battery device 200 may include the auxiliary fixing structure 280 and may not include the fixing structure 220.

According to an embodiment (not shown), an energy storage system including the battery device 200 of this document and a rack (not shown) may be provided.

According to an embodiment of the present disclosure, thermal propagation may be delayed.

According to an embodiment of the present disclosure, the weight of the battery device may be reduced.

According to an embodiment of the present disclosure, production time and costs of the battery device may be reduced.

Only specific examples of implementations of certain embodiments are described. Variations, improvements and enhancements of the disclosed embodiments and other embodiments may be made based on the disclosure of this patent document.

## Claims

1. A battery device comprising:
a case including a cover having a venting hole formed therein;
a cell assembly disposed within the case and including a plurality of battery cells;
a fixing structure formed on a rear surface of the cover;
a first heat blocking member having at least a portion disposed between at least some of the plurality of battery cells and including a first end connected to the fixing structure; and
a second heat blocking member disposed between the cell assembly and the cover and covering the venting hole.

2. The battery device of claim 1, wherein
the fixing structure includes a first protruding region protruding from the rear surface of the cover toward the cell assembly, and
the first end is inserted into the first protruding region.

3. The battery device of claim 2, wherein the fixing structure surrounds at least a portion of the second heat blocking member.

4. The battery device of any one of preceding claims, wherein the fixing structure is formed in the cover and includes a first recess accommodating the first end.

5. The battery device of claim 4, wherein at least a portion of the second heat blocking member faces the first heat blocking member.

6. The battery device of any one of preceding claims, wherein the first heat blocking member includes a mica sheet or ceramic wool.

7. The battery device of any one of preceding claims, wherein gas occurring in the plurality of battery cells configured to pass through the second heat blocking member and the venting hole to be discharged to the outside of the battery device.

8. The battery device of any one of preceding claims, wherein the second heat blocking member includes a ceramic wool or polymer sheet including a plurality of pores.

9. The battery device of any one of preceding claims, wherein
the case is connected to the cover and includes an accommodating portion accommodating the cell assembly, and
the battery device further includes a heat conductive member applied to the accommodating portion.

10. The battery device of claim 9, further comprising
an auxiliary fixing structure formed on a front surface of the accommodating portion,
wherein the first heat blocking member includes a second end, opposite the first end, and connected to the auxiliary fixing structure.

11. The battery device of claim 10, wherein
the auxiliary fixing structure includes a second protruding region protruding from the accommodating portion toward the cell assembly, and
the second end is inserted into the second protruding region.

12. The battery device of claim 10, wherein the auxiliary fixing structure is formed in the accommodating portion and includes a second recess accommodating the second end.

13. The battery device of claim 9, wherein the cell assembly is located between the second heat blocking member and the heat conductive member.

14. The battery device of any one of preceding claims, wherein a first length of the first heat blocking member is greater than a second length of the battery cell.

15. The battery device of any one of preceding claims, wherein the second heat blocking member is surrounded by the cover, the cell assembly, and the first heat blocking member.
